(19) Europäisches Patentamt
European Patent Office
Office européen des brevets

(11) **EP 4 664 596 A1**

(12) **EUROPEAN PATENT APPLICATION**
published in accordance with Art. 153(4) EPC

(43) Date of publication:
**17.12.2025 Bulletin 2025/51**

(21) Application number: **23937024.0**

(22) Date of filing: **17.05.2023**

(51) International Patent Classification (IPC):
**H01M 10/058** (2010.01)    **H01M 10/0525** (2010.01)
**H01M 4/525** (2010.01)    **H01M 10/0567** (2010.01)

(52) Cooperative Patent Classification (CPC):
**Y02E 60/10**

(86) International application number:
**PCT/CN2023/094855**

(87) International publication number:
**WO 2024/234341 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **WU, Zeli
Ningde, Fujian 352100 (CN)**

• **HAN, Changlong
Ningde, Fujian 352100 (CN)**
• **WU, Qiao
Ningde, Fujian 352100 (CN)**
• **GUO, Jie
Ningde, Fujian 352100 (CN)**
• **HUANG, Lei
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **BATTERY AND ELECTRIC DEVICE**

(57)    The present application provides a battery and an electrical apparatus; the battery includes a positive electrode plate and an electrolyte solution, in which, the positive electrode plate includes $Li_xNi_{(1-y-z)}Co_yM_zO_{2-b}$, and M includes at least one element from Mn, Al, Fe, Ti, Mg, Cr, Ga, Cu, Zn, Nb and Zr, $0<x\leq1.2$, $0.18\leq y\leq0.25$, $0\leq z\leq0.2$, $1-y-z\geq0.55$, and $0\leq b\leq0.2$; and the electrolyte solution includes a nitrile compound, and based on the total mass of the electrolyte solution, the content of cyano groups in the electrolyte solution is w%, $w>0$, and $0.04\leq y/w\leq0.4$.

**FIG. 1**

## Description

### TECHNICAL FIELD

The present application belongs to the technical field of batteries, and particularly relates to a battery and an electrical apparatus.

### BACKGROUND

Lithium-ion batteries are not only used in energy storage power systems such as hydropower, thermal power, wind power and solar power stations, but also widely used in electric vehicles such as electric bicycles, electric motorcycles, and electric vehicles, as well as military equipment and aerospace and other fields. With the increasing demand for battery energy density, increasing the upper limit voltage (charge cut-off voltage) of ternary materials is an effective solution. However, after the voltage increases, the cycle performance of the battery will decrease.

### SUMMARY

In view of the technical problems in the BACKGROUND, the present application provides a battery, which can relieve the problem of poor cycling stability of the battery under high charge cut-off voltage.

In order to achieve above objective, in a first aspect, the present application provides a battery, which includes a positive electrode plate and an electrolyte solution, in which, the positive electrode plate includes $Li_xNi_{(1-y-z)}Co_yM_zO_{2-\delta}$, and M includes at least one element from Mn, Al, Fe, Ti, Mg, Cr, Ga, Cu, Zn, Nb and Zr, $0<x\leq1.2$, $0.18\leq y\leq0.25$, $0\leq z\leq0.2$, $1-y-z\geq0.55$, and $0\leq b\leq0.2$; and the electrolyte solution includes a nitrile compound, and based on the total mass of the electrolyte solution, the content of cyano groups in the electrolyte solution is w%, $w>0$, and $0.04\leq y/w\leq0.4$.

In the present application, the battery includes the positive electrode plate including a positive electrode active material of $Li_xNi_{(1-y-z)}Co_yM_zO_{2-b}$ and the electrolyte solution containing a nitrile compound; and by limiting the content of the element cobalt in the positive electrode active material and the content of the cyano groups in the electrolyte solution to meet $0.04\leq y/w\leq0.4$ ($0.18\leq y\leq0.25$, the content of the cyano groups in the electrolyte solution is w%), on one hand, the growth rate of DCR (direct current internal resistance) in the battery cycle process can be reduced, and on the other hand, the content of free cobalt ions in the electrolyte solution can be reduced, the side reaction of a solvent is reduced; and moreover, the stability of the positive electrode active material can be improved, thereby improving the cycle stability of the battery under high charge cut-off voltage.

In some embodiments, $0.1\leq y/w\leq0.3$. Therefore, the cycle stability of the battery under high charge cut-off voltage can be improved while the growth rate of DCR of the battery is reduced.

In some embodiments, $0.5\leq w\leq5$, preferably, $0.5\leq w\leq2$. Therefore, free cobalt ions in the electrolyte solution can be effectively complexed, the side reaction of the solvent is reduced, and the cycle stability of the battery under high charge cut-off voltage is improved.

In some embodiments, $0.18\leq y\leq0.2$. Therefore, the growth rate of DCR in the battery cycle process can be effectively reduced, and the cycle stability of the battery under high charge cut-off voltage can be improved.

In some embodiments, the nitrile compound includes a polynitrile compound, and optionally, the length of the carbon chain between two adjacent cyano groups in the polynitrile compound does not exceed 8 carbons. Therefore, the molecular structure of the polynitrile compound is stable, and the stability of the electrolyte solution is ensured.

In some embodiments, the polynitrile compound includes a dinitrile compound. Therefore, the dinitrile compound can be subjected to parallel adsorption on the surface of the positive electrode active material, so that the stability of a positive electrode electrolyte chemical-electrochemical interface film (CEI film) on the surface of the positive electrode plate is ensured, and furthermore, the cycling stability of the battery is improved.

In some embodiments, the nitrile compound includes a mononitrile compound, and optionally, the length of the carbon chain in the mononitrile compound does not exceed 4 carbons. Therefore, the molecular structure of the mononitrile compound is stable, so that the stability of the electrolyte is ensured.

In some embodiments, the electrolyte solution further includes: hexafluorophosphate and ethylene carbonate, in which, based on the total mass of the electrolyte solution, the content of the hexafluorophosphate is n%, the content of the ethylene carbonate is m%, $n>0$, $m>0$ and $2\leq m/n\leq2.5$. Therefore, the risk that the ethylene carbonate is oxidized on the positive electrode can be effectively reduced.

In some embodiments, m and n meet at least one of the following conditions: $15\leq m\leq30$, preferably, $20\leq m\leq30$; and $8\leq n\leq15$, preferably $10\leq n\leq14$. Therefore, the risk that the ethylene carbonate is oxidized on the positive electrode can be effectively reduced.

In some embodiments, $0.1\leq w/m\leq0.2$. Therefore, the service lives of the positive electrode and the negative electrode can be prolonged, and the cycling stability of the battery is improved.

In some embodiments, the specific surface area of $Li_xNi_{(1-y-z)}Co_yM_zO_{2-b}$ is $\leq 3m^2/g$. Therefore, the side reactions in the electrolyte solution can be reduced.

In some embodiments, based on the total mass of the electrolyte solution, the content of water in the electrolyte solution is $\leq 0.002\%$. Therefore, the integrity of the CEI film can be improved, and the cycle stability of the battery can be improved.

In some embodiments, based on the total mass of the electrolyte solution, the content of hydrofluoric acid in the electrolyte solution is $<0.015\%$. Therefore, the integrity of the CEI film can be improved, and the cycle stability of the battery can be improved.

In a second aspect, the present application provides an electrical apparatus, which includes the battery in the first aspect of the present application. Therefore, the electrical apparatus has excellent cycling stability.

The additional aspects and advantages of the present application will be partially described below, parts of which will become apparent from the description below, or will be understood by the practice of the present application.

## DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the accompanying drawings:

FIG. 1 is a schematic structural diagram of a battery according to an embodiment of the present application;
FIG. 2 is a schematic structural diagram of a battery module according to an embodiment of the present application;
FIG. 3 is a schematic structural view of a battery pack according to an embodiment of the present application;
FIG. 4 is an exploded view of FIG. 3; and
FIG. 5 is a schematic diagram of an embodiment of an electrical apparatus using a battery as a power source.

Reference numerals:

1: secondary battery; 2: battery module; 3: battery pack; 4, upper box; and 5, lower box.

## DETAILED DESCRIPTION

The embodiments of the technical solution of the present application will be described in detail below. The following embodiments are only used to more clearly illustrate the technical solutions of the present application, therefore only as examples, and cannot be used to limit the scope of protection of the present application.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

For conciseness, only certain numerical ranges are explicitly disclosed herein. However, any lower limit can be combined with any upper limit to form a range that is not explicitly recited; any lower limit can be combined with another lower limit to form a range that is not explicitly recited; and any upper limit may be combined with another upper limit to form a range that is not explicitly recited. In addition, each separately disclosed point or individual numeral value may serve as a lower or upper limit to be combined with any other point or individual numeral value or with other lower or upper limits to form an unspecified range.

In the description of the embodiment of the present application, the term "and/or" is merely an association that describes the associated object, indicating that there can be three kinds of relationships, such as A and/or B, which can be denoted as: the existence of A alone, the existence of A and B at the same time, and the existence of B alone. In addition, the character "/" in this article generally indicates that the relationship between the preceding and following objects is an "or".

Unless otherwise defined, all technical and scientific terms used herein have the same meanings as generally understood by those skilled in the art of the present application; the terms used herein are intended only to describe specific embodiments and are not intended to limit the present application; and the terms "including" and "having" and any variations thereof in the description and claims of the present application and in the foregoing description of the accompanying drawings and in the description thereof, and any variations thereof, are intended to cover non-exclusive inclusions.

At present, in view of the development of the market situation, the application of lithium-ion batteries is becoming more and more extensive. Lithium-ion batteries are not only used in energy storage power systems such as hydropower, thermal power, wind power and solar power stations, but also widely used in electric vehicles such as electric bicycles, electric motorcycles, and electric vehicles, as well as military equipment and aerospace and other fields. With the continuous expansion of the application field of the lithium-ion batteries, the demand in the market is also constantly increasing.

Positive electrode active materials are the core key materials of the lithium-ion batteries, and ternary materials are one of the most widely used positive electrode active materials, and the ternary materials serving as positive electrode active materials of the lithium-ion batteries can improve the energy density of the batteries. However, after the voltage increases, with the de-intercalation of lithium ions, the ternary materials are prone to collapse or damage, resulting in the deterioration of the stability of the ternary material, which affects the cycle stability of the battery.

In order to relieve the problem of collapse or damage of the ternary materials, the composition of the positive electrode active material and the electrolyte solution can be optimized to improve the stability of the positive electrode active material, thus improving the cycling stability of the battery. Specifically, after the voltage of the lithium-ion battery increases, as the lithium ions are de-intercalated into the electrolyte solution, vacancies are formed in the surface of the positive electrode active material, resulting in the collapse or damage of the positive electrode active material, and the cobalt ions in the positive electrode active material can increase the spreading rate of the lithium ions; and when the lithium ions on the surface of the positive electrode active material are de-intercalated into the electrolyte solution, the lithium ions inside the positive electrode active material can spread to the surface of the positive electrode active material to supplement the de-intercalated lithium ions, thereby preventing the collapse of the positive electrode active material and improving the stability of the positive electrode active material, and further improving the cycle stability of the battery. However, too much cobalt will catalyze the solvent oxidation in the electrolyte solution to worsen the life of the battery, while the cyano groups can effectively complex the free cobalt ions to prevent the free cobalt ions from oxidizing the solvent, thus reducing the side reactions of the solvent.

The electrical apparatus disclosed by the embodiment of the present application can be used in an electrical apparatus using the battery as a power source or various energy storage systems using the battery as an energy storage element. The electrical apparatus can be but not limited to mobile phones, tablet computers, notebook computers, electric toys, electric tools, electric vehicles, electric automobiles, ships, spacecraft and the like. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

In a first aspect, the present application provides a battery, which includes a positive electrode plate and an electrolyte solution, in which, the positive electrode plate includes $Li_xNi_{(1-y-z)}Co_yM_zO_{2-b}$, and M includes at least one element from Mn, Al, Fe, Ti, Mg, Cr, Ga, Cu, Zn, Nb and Zr, $0<x\leq1.2$, $0.18\leq y\leq0.25$, $0\leq z\leq0.2$, $1-y-z\geq0.55$, and $0\leq b\leq0.2$; and the electrolyte solution includes a nitrile compound, and based on the total mass of the electrolyte solution, the content of cyano groups in the electrolyte solution is w%, $w>0$, and $0.04\leq y/w\leq0.4$.

Without being limited by any theory, in the present application, the battery includes the positive electrode plate including a positive electrode active material of $Li_xNi_{(1-y-z)}Co_yM_zO_{2-b}$ and the electrolyte solution containing a nitrile compound; the element cobalt ($0.18\leq y\leq0.25$) with corresponding content in the positive electrode active material can obviously improve the electronic impedance and ionic impedance of the positive electrode active material, thereby inhibiting the DCR growth rate in the battery cycle process. Moreover, the element cobalt ($0.18\leq y\leq0.25$) with corresponding content in the positive electrode active material can improve the spreading rate of the lithium ions in the positive electrode active material; and with the de-intercalation of the lithium ions from the surface of the positive electrode active material under high charge cut-off voltage, the lithium ions in the positive electrode active material can rapidly spread to the surface of the positive electrode active material, thereby reducing the probability of collapse or damage of the positive electrode active material, improving the stability of the positive electrode active material, and improving the cycle stability of the battery under the high charge cut-off voltage. However, if the content of cobalt is excessive, the free cobalt ions may have stronger catalytic action and can catalyze the oxidation of the solvent in the electrolyte solution to produce gas, which decreases the service life of the battery. Furthermore, the free cobalt ions are easy to dissolve out in the electrolyte solution, and the dissolved cobalt ions are reduced at the negative electrode to block the transmission of the lithium ions. By adding the nitrile compound to the electrolyte solution, the cyano groups in the nitrile compound can effectively complex the free cobalt ions in the electrolyte solution to inhibit the dissolution of the cobalt ions in the electrolyte solution, thus the free cobalt ions can be stably fixed on the surface of the positive electrode active material; and meanwhile, the complexed cobalt ions lose the catalytic performance, thus reducing the side reaction of the solvent. In the present application, the content ($0.18\leq y\leq0.25$) of the cobalt element in the positive electrode active material and the content (w%) of the cyano group in the electrolyte solution meet $0.04\leq y/w\leq0.4$, therefore, on one hand, the DCR growth rate in the battery cycle process can be reduced; and on the other hand, the content of the free cobalt ions in the electrolyte solution can be reduced, thus the side reaction of the solvent is reduced, and moreover, the cycle stability of the positive electrode active material can be improved, and as a result, the cycle stability of the battery under the high charge cut-off voltage can be improved.

The "nitrile compound" in the present application refers to a compound with the cyano groups in the structure.

In the present application, the content of the cyano groups is quantitatively analyzed by gas chromatography with reference to GB/T-9722-2006 gas chromatography, the cyano groups in the electrolyte solution are separated into a chromatographic column and a detection signal spectrogram of each component is generated; component qualification is performed by the retention time; and a standard solution is prepared to correct the peak area so as to realize quantification of the cyano groups.

In some embodiments, in the positive electrode active material $Li_xNi_{(1-y-z)}Co_yM_zO_{2-b}$, $0<x\leq1.2$, for example, $0.2\leq x\leq1.2$, $0.4\leq x\leq1$, $0.5\leq x\leq0.8$, and $0.6\leq x\leq0.7$. The positive electrode active material includes lithium ions with this content, and thus the battery has high capacity.

It is to be noted that according to the positive electrode plate, the battery and the electrical apparatus, the lithium ions will be consumed in the processes of formation, cycling and the like of the battery, so the condition that the content x of the lithium element in the measured positive electrode active material is less than 1 may be caused. Moreover, if the positive electrode plate and the negative electrode plate are subjected to lithium supplementation, the condition that the content x of the lithium element in the measured positive electrode active material is more than 1 may be caused after the battery is subjected to the processes of formation, circulation and the like.

In some embodiments, in the positive electrode active material $Li_xNi_{(1-y-z)}Co_yM_zO_{2-b}$, $0.18\leq y\leq0.25$, for example, $0.19\leq y\leq0.24$, $0.2\leq y\leq0.23$, and $0.21\leq y\leq0.22$. In other embodiments, in the positive electrode active material $Li_xNi_{(1-y-z)}Co_yM_zO_{2-b}$, $0.18\leq y\leq0.2$. The positive electrode active material includes the element cobalt with this content, thus the electronic impedance and the ionic impedance of the positive electrode active material can be obviously improved, the DCR growth rate in the battery cycle process can be inhibited, and moreover, the spreading rate of the lithium ions in the positive electrode active material can be improved due to the element cobalt with this content in the positive electrode active material; and with the de-intercalation of the lithium ions from the surface of the positive electrode active material under high charge cut-off voltage, the lithium ions in the positive electrode active material can rapidly spread to the surface of the positive electrode active material, thereby reducing the probability of collapse or damage of the positive electrode active material, improving the stability of the positive electrode active material, and improving the cycle stability of the battery under the high charge cut-off voltage.

In some embodiments, in the positive electrode active material $Li_xNi_{(1-y-z)}Co_yM_zO_{2-b}$, $0\leq z\leq0.2$, for example, $0\leq z\leq0.1$, $0.05\leq z\leq0.1$, $0.1\leq z\leq0.15$, and $0.15\leq z\leq0.2$, and moreover, $1-y-z\geq0.55$, for example, $0.55\leq1-y-z\leq0.82$, $0.58\leq1-y-z\leq0.8$, $0.6\leq1-y-z\leq0.78$, $0.62\leq1-y-z\leq0.75$, $0.65\leq1-y-z\leq0.72$, and $0.68\leq1-y-z\leq0.7$. Therefore, the positive electrode active material with this composition has excellent energy density.

In some embodiments, in the positive electrode active material $Li_xNi_{(1-y-z)}Co_yM_zO_{2-b}$, $0\leq b\leq0.2$, for example, $0.05\leq b\leq0.2$, $0.1\leq b\leq0.2$, and $0.15\leq b\leq0.2$.

It is to be noted that according to the positive electrode plate, the battery or the electrical apparatus, element oxygen in the positive electrode active material will be consumed in the processes of circulation and the like of the battery, so the condition that the content 2-b of the element oxygen in the positive electrode active material is less than 2 may be caused.

In some embodiments, the specific surface area BET of the positive electrode active material $Li_xNi_{(1-y-z)}Co_yM_zO_{2-b}$ is shown as $BET\leq3m^2/g$, for example, $BET\leq0.5m^2/g$, $BET\leq1m^2/g$, $BET\leq1.5m^2/g$, $BET\leq2m^2/g$, and $BET<2.5m^2/g$. Therefore, the side reaction in electrolyte solution can be reduced.

In the present application, the specific surface area of the positive electrode active material can be obtained by testing according to the following method: preparing a multi-station type full-automatic specific surface area and pore analyzer GeminiVII2390 from U.S. Micromeritics, placing about 7 g of sample into a 9cc long tube with a bulb, degassing at the temperature of 200°C for 2 h, then placing the sample into a main machine to test to obtain BET (specific surface area) data of the positive electrode active material.

In some embodiments, the content y of the element cobalt in the positive electrode active material in the battery and the content w% of the cyano groups in the electrolyte solution meet $0.04\leq y/w\leq0.4$, for example, $0.05\leq y/w\leq0.35$, $0.1\leq y/w\leq0.3$, $0.15\leq y/w\leq0.25$, $0.2\leq y/w\leq0.25$.

In the present application, by limiting the content y of the element cobalt in the positive electrode active material in the battery and the content w% of the cyano groups in the electrolyte solution to meet $0.04\leq y/w\leq0.4$, on the one hand, the growth rate of DCR in the circulation process of the battery can be reduced, and on the other hand, the content of the free cobalt ions in the electrolyte solution can be reduced, thus the side reactions of the solvent can be reduced; and moreover, the stability of the positive electrode active material can be improved, so that the circulation stability of the battery under high cut-off voltage is improved. In some other embodiments, the content y of the element cobalt in the positive electrode active material in the battery and the content w% of the cyano groups in the electrolyte solution meet $0.1\leq y/w\leq0.3$.

In some embodiments, the content w% of the cyano groups in the electrolyte group in the battery meets $0.5\leq w\leq5$, for example, $1\leq w\leq4.5$, $1.5\leq w\leq4$, $2\leq w\leq3.5$, and $2.5\leq w\leq3$. In some other embodiments, the content w% of the cyano groups in the electrolyte group in the battery meets $0.5\leq w\leq2$.

The electrolyte solution includes the cyano groups with the above content, so that the free cobalt ions in the electrolyte solution can be effectively complexed to inhibit the dissolution of the cobalt ions in the electrolyte solution, and then the free cobalt ions can be stably fixed on the surface of the positive electrode active material; and moreover, the complexed cobalt ions lose the catalytic performance, thereby reducing side reaction of the solvent and improving the cycling performance of the battery.

In some embodiments, the nitrile compound in the electrolyte solution may include at least one of a mononitrile compound and a polynitrile compound. For example, when the nitrile compound includes the mononitrile compound, in some specific embodiments, the length of the carbon chain in the mononitrile compound does not exceed 4 carbons. The mononitrile compound molecule with the carbon chain length is not easy to decompose in the electrolyte solution, so that the stability of the mononitrile compound can be improved, then the stability of the electrolyte is improved, and further, the complexing action on the free cobalt ions is improved. In some other embodiments, the mononitrile compound can include acetonitrile, propionitrile, acrylonitrile and the like.

It is to be noted that the "polynitrile compound" in the present application refers to the nitrile compound containing more than two or two cyano groups.

In some embodiments, the nitrile compound includes the polynitrile compound; and in some specific embodiments, the length of the carbon chain between two adjacent cyano groups in the polynitrile compound does not exceed 8 carbons. The molecules of the polynitrile compound with the carbon chain length are not easily decomposed in the electrolyte solution, so that the stability of the polynitrile compound can be improved, then the stability of the electrolyte is improved, and further, the complexing action on the free cobalt ions is improved. In some other embodiments, the polynitrile compound can include a dinitrile compound, a trinitrile compound and the like; and the trinitrile compound includes 1,3,6-hexanetrinitrile. In some embodiments, the polynitrile compound includes the dinitrile compound, for example, the dinitrile compound can include at least one of malononitrile, succinonitrile, octanedionitrile and adiponitrile.

In the present application, the dinitrile compound can be subjected to parallel adsorption on the surface of the positive electrode active material; two ends of a molecular chain of the dinitrile compound are adsorbed on the surface of the positive electrode active material, thus the stability of the CEI film on the surface of the positive electrode plate can be improved to a certain extent, and the cycling stability of the battery is improved In some other embodiments, the dinitrile compound includes at least one of succinonitrile and octanedionitrile.

In some embodiments, the electrolyte solution in the present application further includes: hexafluorophosphate and ethylene carbonate; and based on the total mass of the electrolyte, the content of the hexafluorophosphate is n%, the content of the ethylene carbonate is m%, and m and n meet n>0, m>0, and $2 \leq m/n \leq 2.5$, for example, $2.1 \leq m/n \leq 2.5$, $2.2 \leq m/n \leq 2.5$, $2.3 \leq m/n \leq 2.5$, and $2.4 \leq m/n \leq 2.5$. The content of the ethylene carbonate and the content of the hexafluorophosphate meet the above ratio, on one hand, the film-forming property of the ethylene carbonate on the negative electrode and the property of the hexafluorophosphate in improving conductivity of the electrolyte solution can be simultaneously exerted; and on the other hand, the oxidation of the ethylene carbonate on the surface of the positive electrode plate can be reduced, so that the cycling stability of the battery is improved. In some specific embodiments, the electrolyte can include lithium hexafluorophosphate.

In the present application, the content of hexafluorophosphate in the electrolyte solution is detected and quantified by ion chromatography, and the specific implementation can refer to the JY/T-020 General Gule of Ion Chromatography.

In some embodiments, the content m% of ethylene carbonate in the electrolyte solution meets $15 \leq m \leq 30$, for example, $16 \leq m \leq 29$, $17 \leq m \leq 28$, $18 \leq m \leq 27$, $19 \leq m \leq 26$, $20 \leq m \leq 25$, $21 \leq m \leq 24$, and $22 \leq m \leq 23$. In some embodiments, the content m% of ethylene carbonate in the electrolyte solution meets $20 \leq m \leq 30$. In the present application, ethylene carbonate with this content can form a stable (Solid Electrolyte Interface film) SEI film on the surface of the negative electrode plate, thereby improving the cycle stability of the battery.

In some embodiments, the content n% of hexafluorophosphate in the electrolyte solution meets $8 \leq n \leq 15$, for example, $9 \leq n \leq 14$, $10 \leq n \leq 13$, and $11 \leq n \leq 12$. In some other embodiments, the content n% of hexafluorophosphate in the electrolyte solution meets $10 \leq n \leq 14$. In the present application, the hexafluorophosphate with this content can effectively improve the conductivity of the electrolyte solution, thereby improving the dynamic performance of the battery.

In some embodiments, the content w% of the cyano groups in the electrolyte solution and the content m% of ethylene carbonate meet $0.1 \leq w/m \leq 0.2$, for example, $0.11 \leq w/m \leq 0.19$, $0.12 \leq w/m \leq 0.18$, $0.13 \leq w/m \leq 0.17$, $0.14 \leq w/m \leq 0.16$, and $0.14 \leq w/m \leq 0.15$.

In the present application, by limiting the content w% of the cyano groups in the electrolyte solution and the content m% of ethylene carbonate to meet $0.1 \leq w/m \leq 0.2$, the cyano groups can improve the cycling performance of the battery to a certain extent, thus reducing the growth rate of DCR of the battery; ethylene carbonate can improve the film-forming performance to the negative electrode; the cyano groups and ethylene carbonate play a synergistic role to prolong the service lives of the positive electrode and the negative electrode while effectively playing the property of the cyano groups in effectively complexing the free cobalt ions and the film-forming property of the ethylene carbonate to the negative electrode.

In some embodiments, lithium salt in the electrolyte solution contains lithium hexafluorophosphate and also includes one or more of lithium tetrafluoroborate (LiBF$_4$), lithium perchlorate (LiClO$_4$), lithium hexafluoroarsenate (LiAsF$_6$), lithium bis(fluorosulfonyl)imide (LiFSi), lithium bis(trifluoromethanesulfonyl)imide (LiTFSI), lithium trifluoromethanesulfonate (LiTFS), lithium difluoroborate (LiDFOB), lithium difluoroborate (LiBOB), lithium difluorophosphate (LiPO$_2$F$_2$), lithium difluorooxalate phosphate (LiDFOP) and lithium tetrafluoroborate phosphate (LiTFOP).

In some embodiments, the solvent in the electrolyte solution contains ethylene carbonate and also includes one or more of propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte solution also includes additives. For example, the additives can include a negative electrode film-forming additive, or a positive electrode film-forming additive or additives that can improve some performances of the battery, for example, an additive that can improve the overcharge performance of the battery, an additive that can improve the high-temperature performance of the battery, and an additive that can improve the low-temperature performance of the battery.

In some embodiments, based on the total mass of the electrolyte, the content of water in the electrolyte solution is ≤0.002%. Therefore, the integrity of the CEI film can be improved, and the cycling performance of the battery is improved.

In the present application, the "content of water in electrolyte solution" refers to the content of water in the electrolyte solution per unit mass. A test method for the "content of water in electrolyte solution" includes: injecting the electrolyte solution into an electrolytic cell reaching balance, after an indicating electrode detects H$_2$O, performing electrode oxidation to oxidize I$^-$ into I$_2$, in which, I$_2$ and H$_2$O are subjected to a quantitative chemical reaction, then calculating the water content; and according to 5.9 Determination of moisture in HG/T4067-2015 Hexafluorophosphate Electrolyte Solution, calculating the water content according to the consumption of iodine, in which, the quantitative reaction formula of I$_2$ and H$_2$O is: H$_2$O+I$_2$+SO$_2$+3C$_5$H$_5$N=2C$_5$H$_5$N • HI+C$_5$H$_5$N • SO$_3$.

In some embodiments, based on the total mass of the electrolyte solution, the content of hydrofluoric acid in the electrolyte solution is ≤0.015%. Therefore, the integrity of the CEI film can be improved, and the cycling performance of the battery is improved.

In the present application, the "content of hydrofluoric acid in electrolyte solution" refers to the content of hydrofluoric acid in the electrolyte solution per unit mass. The "content of hydrofluoric acid in electrolyte solution" is subjected to hydrofluoric acid analysis by an acid-base titration method (SYA). In a dry environment, free acid in the electrolyte solution is titrated by a standard triethylamine solution, and calculated according to the HF content, HF(ppm)= (V2-V1)/1000*C*20/m*1000000=(V2-V1)*C/m*20,000; in the equation, 0.01 refers to the concentration of the SYA standard solution and is 0.02 mol/L; V0 refers to the volume reading of a burette before titration and has the unit of ml; V refers to the volume reading of the burette after an electrolyte solution sample is added and when titration is performed to an end point and has the unit of ml; 20 refers to the molar weight of HF and has the unit of g/mol; m refers to the volume of weighed electrolyte solution and has the unit of g; and 20000 refers to a coefficient transformed into ug/g.

In some embodiments, the positive electrode plate generally includes a positive electrode current collector and a positive electrode active material layer arranged on the positive electrode current collector, and the positive electrode active material layer includes the positive electrode active material.

The positive electrode current collector can be a conventional metal foil or a composite current collector (a metal material can be arranged on a polymer substrate to form the composite current collector). As an example, the positive electrode current collector can be an aluminum foil.

The positive electrode active material layer in the positive electrode plate generally optionally includes a binder, a conductive agent and other optional auxiliaries.

As an example, the conductive agent can include one or more of superconducting carbon, acetylene black, carbon black, Ketjen black, carbon dots, carbon nanotubes, Super P (SP), graphene and carbon nanofibers.

As an example, the binder can include one or more of Styrene Butadiene Rubber (SBR), water-based acrylic resin, polyvinylidene fluoride (PVDF), Polytetrafluoroethylene (PTFE), ethylenevinyl acetate copolymer (EVA), polyacrylic acid (PAA), carboxymethyl cellulose (CMC), polyvinyl alcohol (PVA) and polyvinyl butyral (PVB).

The battery refers to a battery which can activate an active material by means of charging after discharging for continuous work.

Generally, the battery includes the positive electrode plate, the negative electrode plate, a separator and the electrolyte solution. In the charge-discharge process of the battery, active ions are intercalated and de-intercalated back and forth between the positive electrode plate and the negative electrode plate. The separator is arranged between the positive electrode plate and the negative electrode plate and plays a role in isolation. The electrolyte plays a role in conducting ions between the positive electrode plate and the negative electrode plate.

In the battery, the negative electrode plate generally includes a negative electrode current collector and a negative electrode active material layer arranged on the negative electrode current collector, and the negative electrode active material layer includes a negative electrode active material.

The negative electrode current collector can be a conventional metal foil or a composite current collector (for example, the metal material can be arranged on the polymer substrate to form the composite current collector). As an example, the negative electrode current collector can be a copper foil.

The specific type of the negative electrode active material is not limited, and active materials which are known in the art and can be used for the negative electrode of the battery can be adopted, and those skilled in the art can select the active materials according to actual requirements. As an example, the negative electrode active material can include but be not limited to one or more of artificial graphite, natural graphite, hard carbon, soft carbon, a silicon-based material and a tin-based material. The silicon-based material can include one or more of elemental silicon, a silicon-oxygen compound (such as silicon monoxide), a silicon-carbon compound, a silicon-nitrogen compound and a silicon alloy. The tin-based material can include one or more of elemental tin, a tin-oxygen compound and a tin alloy. These materials can be obtained by commercial approaches.

In some embodiments, in order to further improve the energy density of the battery, the negative electrode active material can include the silicon-based material.

The negative electrode active material layer also generally optionally includes the binder, the conductive agent and other optional auxiliaries.

As an example, the conductive agent can include one or more of superconducting carbon, acetylene black, carbon black, Ketjen black, carbon dots, carbon nanotubes, graphene and carbon nanofibers.

As an example, the binder can include one or more of Styrene Butadiene Rubber (SBR), water-based acrylic resin, polyvinylidene fluoride (PVDF), Polytetrafluoroethylene (PTFE), ethylenevinyl acetate copolymer (EVA), polyvinyl alcohol (PVA) and polyvinyl butyral (PVB).

As an example, the other optional auxiliaries can include a thickener and a dispersant (such as sodium carboxymethylcellulose CMC-Na) and a PTC thermistor material.

In the present invention, there is no special limitation on the separator, any well-known separator with a porous structure and electrochemical stability and mechanical stability can be selected according to actual requirements, for example, the separator can be a single-layer or multilayer film containing one or more of glass fibers, non-woven fabrics, polyethylene, polypropylene and polyvinylidene fluoride.

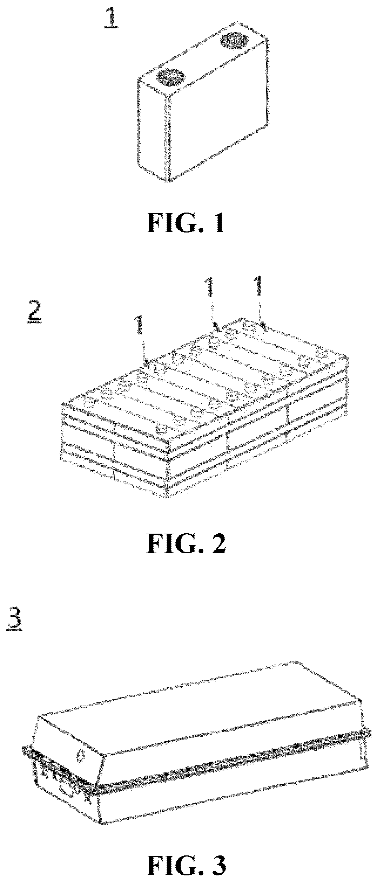

In the embodiment of the present application, there is no special limitation on the shape of the battery, and the battery can be cylindrical, square or any other shape. As shown in FIG. 1, it is a square secondary battery 1 taken as an example.

In some embodiments, the secondary battery can include an outer package. The outer package is configured to package the positive electrode plate, the negative electrode plate and the electrolyte solution.

In some embodiments, the outer package can include a case and a cover plate. The case may include a bottom plate and a side plate connected to the bottom plate, which enclose to form an accommodating cavity. The case has an opening in communication with the accommodating cavity, and the cover plate can cover the opening to close the accommodating cavity.

The positive electrode plate, the negative electrode plate, and the separator film can be made into an electrode assembly by a winding process or a lamination process. The electrode assembly is packaged in the accommodating cavity. The electrolyte solution infiltrates the electrode assembly. One or more electrode assemblies are in the battery, and the number can be selected according to requirements.

In some embodiments, the outer package of the battery can be a hard shell, such as a hard plastic shell, an aluminum shell, and a steel shell.

The outer package of the battery can also be a soft package, such as a bag type soft package. The material of the soft package can be plastic, such as one or more of polypropylene (PP), polybutylene terephthalate (PBT), and poly(butylene succinate) (PBS).

In some embodiments, the battery can be assembled into a battery module, a plurality of lithium-ion batteries can be in the battery module, and the specific number can be selected according to the application and the capacity of the battery module.

In FIG. 2, a battery module 2 is taken as an example. With reference to FIG. 2, in the battery module 2, a plurality of secondary batteries 1 can be sequentially arranged in the length direction of the battery module 2. Of course, they may be arranged in any other way. Further, the plurality of secondary batteries 1 can be further fixed by fasteners.

The battery module 2 can also include a casing with an accommodating space, and the plurality of secondary batteries 1 are accommodated in the accommodating space. In some embodiments, the battery modules can also be assembled into a battery pack, and the number of the battery modules in the battery can be selected according to the application and the capacity of the battery pack.

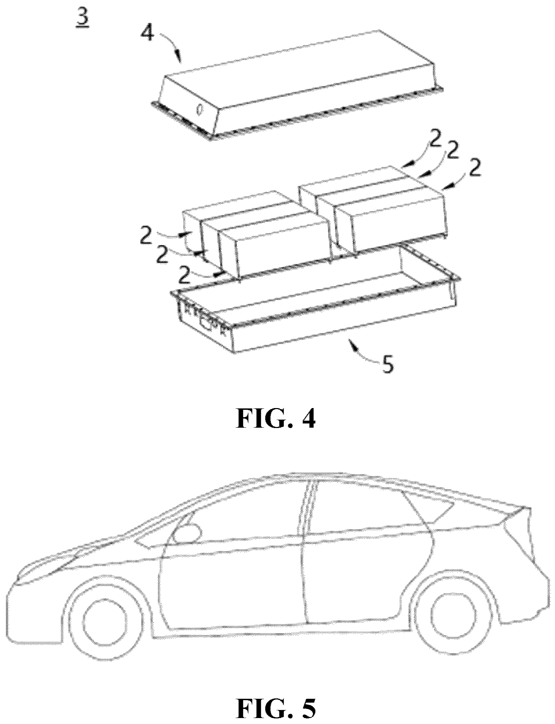

In FIG. 3 and FIG. 4, a battery pack 3 is taken as an example. With reference to FIG. 3 and FIG. 4, the battery pack 3 can include a battery box and a plurality of battery modules 2 arranged in the battery box. The battery box includes an upper box 4 and a lower box 5, and the upper box 4 can cover the lower box 5 and form a closed space for accommodating the battery modules 2. The plurality of battery modules 2 can be arranged in the battery box in any mode.

[Electrical apparatus]

The present application further provides an electrical apparatus, which includes at least one of the secondary battery, the battery module and the battery pack. The battery, the battery module or the battery pack can be used as a power source for the electrical apparatus and can also be used as an energy storage unit for the electrical apparatus. The electrical apparatus can include but be not limited to a mobile device (such as a mobile phone, and a notebook computer), an electric vehicle (such as a pure electric vehicle, a hybrid electric vehicle, a plug-in hybrid electric vehicle, an electric bicycle, an electric scooter, an electric golf cart, and an electric truck), an electric train, a ship, a satellite, and an energy storage system.

For the electrical apparatus, the secondary battery, the battery module or the battery pack can be selected according to the use requirements.

In FIG. 5, the electrical apparatus is taken as an example. The electrical apparatus includes the pure electric vehicle, the hybrid electric vehicle, or the plug-in hybrid electric vehicle. In order to meet the requirements of the electrical apparatus on high power and high energy density of the secondary battery, the battery pack or the battery module can be adopted.

As another example, the electrical apparatus can be the mobile phone, the tablet personal computer, or the notebook computer. The electrical apparatus is generally required to be light and thin, and battery can be adopted as the power source.

In order to make the solved technical problems, technical solutions and beneficial effects in the present application clearer, the present application will be further described in detail below in conjunction with the examples and accompanying drawings. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

Example 1

1. Preparation of positive electrode plate

A polyvinylidene fluoride binder was fully dissolved in N-methyl pyrrolidone, and a carbon black conductive agent and a positive electrode active material $Li_xNi_{(1-y-z)}Co_yM_zO_{2-b}$ (composition shown in Table 1) were added to prepare uniformly-dispersed positive electrode slurry (the mass ratio of the polyvinylidene fluoride binder to the carbon black conductive agent to the positive electrode active material was 10:10:80); an upper surface and a lower surface of an aluminum foil were uniformly coated with the positive electrode slurry, and then the aluminum foil was transferred to a vacuum drying oven for complete drying; and an obtained electrode plate was rolled and then punched to obtain the positive electrode plate.

2. Preparation of negative electrode plate

Artificial graphite, a carbon nanotube material and a binder sodium carboxymethyl cellulose were added to water according to the mass ratio of 8:1:1 and stirred to obtain uniform negative electrode slurry; the upper surface and the lower surface of a copper foil were uniformly coated with the negative electrode slurry, and then the copper foil was transferred to the vacuum drying oven for complete drying; and then punching was performed to obtain the negative electrode plate.

3. Preparation of electrolyte solution

In an argon atmosphere glove box ($H_2O$<0.1ppm, $O_2$<0.1ppm), a nitrile compound and lithium hexafluorophosphate $LiPF_6$ were dissolved in ethylene carbonate and methyl ethyl carbonate, the mass ratio of the ethylene carbonate to the methyl ethyl carbonate was 3:7 (the content and type of the nitrile compound, and the content of the lithium hexafluorophosphate and the ethylene carbonate are shown in Table 1), and uniform stirring was performed to obtain the electrolyte solution.

5. Separator

A polypropylene film was used as the separator.

6. Preparation of lithium-ion battery

The positive electrode plate, the separator and the negative electrode plate were stacked in sequence, the separator was located between the positive electrode plate and the negative electrode plate to play an isolation role, and the positive electrode plate, the separator and the negative electrode plate were wound to obtain an electrode assembly; and the electrode assembly was placed in an outer package, the prepared electrolyte solution was injected into a dried lithium-ion battery, and the dried lithium-ion battery was subjected to vacuum packaging, standing, formation and shaping processes to obtain the lithium-ion battery.

The difference between Examples 2-19 and Contrast Examples 1-4 and the Example 1 is shown in Table 1.

Table 1

| | Composition of positive electrode active material $Li_xNi_{(1-y-z)}Co_yM_zO_{2-b}$ | | | | | | | Composition of nitrile compound | Content of ethylene carbonate m% | Content of hexafluoro phosphate n% | m/n | w/m |
|---|---|---|---|---|---|---|---|---|---|---|---|---|
| | x | y | z | 1-y-z | b | w (content of nitrile groups) | y/w | | | | | |
| Example 1 | 1 | 0.23 | 0.1 | 0.67 | 0 | 2.40 | 0.10 | Butanedinitrile | 20 | 9 | 2.2 | 0.12 |
| Example 2 | 1 | 0.18 | 0.1 | 0.72 | 0 | 2.40 | 0.08 | Butanedinitrile | 20 | 9 | 2.2 | 0.12 |
| Example 3 | 1 | 0.2 | 0.1 | 0.7 | 0 | 2.40 | 0.08 | Butanedinitrile | 20 | 9 | 2.2 | 0.12 |
| Example 4 | 1 | 0.25 | 0.1 | 0.65 | 0 | 2.40 | 0.10 | Butanedinitrile | 20 | 9 | 2.2 | 0.12 |
| Example 5 | 1 | 0.2 | 0.1 | 0.7 | 0 | 0.50 | 0.40 | Butanedinitrile | 20 | 9 | 2.2 | 0.03 |
| Example 6 | 1 | 0.23 | 0.1 | 0.67 | 0 | 1.00 | 0.23 | Butanedinitrile | 20 | 9 | 2.2 | 0.05 |
| Example 7 | 1 | 0.23 | 0.1 | 0.67 | 0 | 2.00 | 0.12 | Butanedinitrile | 20 | 9 | 2.2 | 0.10 |
| Example 8 | 1 | 0.23 | 0.1 | 0.67 | 0 | 3.00 | 0.08 | Butanedinitrile | 20 | 9 | 2.2 | 0.15 |
| Example 9 | 1 | 0.23 | 0.1 | 0.67 | 0 | 4.00 | 0.06 | Butanedinitrile | 20 | 9 | 2.2 | 0.20 |
| Example 10 | 1 | 0.23 | 0.1 | 0.67 | 0 | 5.00 | 0.05 | Butanedinitrile | 20 | 9 | 2.2 | 0.25 |
| Example 11 | 1 | 0.24 | 0.1 | 0.66 | 0 | 0.80 | 0.30 | Butanedinitrile | 20 | 9 | 2.2 | 0.04 |
| Example 12 | 1 | 0.24 | 0.1 | 0.66 | 0 | 1.20 | 0.20 | Butanedinitrile | 20 | 9 | 2.2 | 0.06 |
| Example 13 | 1 | 0.23 | 0.1 | 0.67 | 0 | 2.40 | 0.10 | Butanedinitrile | 18 | 9 | 2.0 | 0.13 |
| Example 14 | 1 | 0.23 | 0.1 | 0.67 | 0 | 2.40 | 0.10 | Butanedinitrile | 25 | 10 | 2.5 | 0.10 |
| Example 15 | 1 | 0.23 | 0.1 | 0.67 | 0 | 2.40 | 0.10 | Octanedionitrile | 20 | 9 | 2.2 | 0.12 |
| Example 16 | 1 | 0.23 | 0.1 | 0.67 | 0 | 2.40 | 0.10 | 1,3,6-hexanetrinitrile | 20 | 9 | 2.2 | 0.12 |

(continued)

| | Composition of positive electrode active material $Li_xNi_{(1-y-z)}Co_yM_zO_{2-b}$ | | | | | | | Composition of nitrile compound | Content of ethylene carbonate m% | Content of hexafluoro phosphate n% | m/n | w/m |
|---|---|---|---|---|---|---|---|---|---|---|---|---|
| | x | y | z | 1-y-z | b | w (content of nitrile groups) | y/w | | | | | |
| Example 17 | 1 | 0.23 | 0.1 | 0.67 | 0 | 2.40 | 0.10 | Acrylonitrile | 20 | 9 | 2.2 | 0.12 |
| Example 18 | 1 | 0.23 | 0.1 | 0.67 | 0 | 3.00 | 0.08 | Butanedinitrile | 30 | 15 | 2.0 | 0.10 |
| Example 19 | 1 | 0.23 | 0.1 | 0.67 | 0 | 3.00 | 0.08 | Butanedinitrile | 30 | 14 | 2.1 | 0.10 |
| Contrast Example 1 | 1 | 0.15 | 0.1 | 0.75 | 0 | 2.40 | 0.06 | Butanedinitrile | 20 | 9 | 2.2 | 0.12 |
| Contrast Example 2 | 1 | 0.3 | 0.1 | 0.6 | 0 | 2.40 | 0.13 | Butanedinitrile | 20 | 9 | 2.2 | 0.12 |
| Contrast Example 3 | 1 | 0.23 | 0.1 | 0.67 | 0 | 8.00 | 0.03 | Butanedinitrile | 20 | 9 | 2.2 | 0.40 |
| Contrast Example 4 | 1 | 0.23 | 0.1 | 0.67 | 0 | 0.50 | 0.46 | Butanedinitrile | 20 | 9 | 2.2 | 0.03 |

The cycle capacity retention ratio, the DCR growth rate, the positive electrode active material BET, the water content in the electrolyte solution and the hydrofluoric acid content in the electrolyte solution of the lithium-ion batteries obtained in the Examples 1-19 and the Contrast Examples 1-4 at 45°C were tested, and the test results are shown in Table 2.

1. Cycle capacity retention ratio of battery at 45°C

Under the condition of cycling at 45°C, the battery was charged at constant current at the rate of 0.5C until the charge cut-off voltage was 4.5 V, and then charged at constant voltage until the current was ≤0.05C; after standing for 5 min, the battery was discharged at constant current at the rate of 0.33 C until the discharge cut-off voltage was 2.5 V, and then stood for 5 min, and the battery capacity $C_0$ at the moment was recorded. The battery was charged and discharged for 600 cycles according to this method, and the battery capacity after 600 cycles was recorded as $C_1$.

$$\text{Cycle capacity retention ratio of battery at } 45°C = C_1/C_0 \times 100\%.$$

2. Calculation method of DCR growth rate of battery

Before the battery started to cycle, the SOC was adjusted to 50%. Then the discharged water discharged at the rate of 4 C for 30 S, the voltage before discharging was recorded as V1, the voltage after discharging was recorded as V2, $DCR_1 = (V1-V2)/I$ (I corresponded to the current value of discharging at 4C) was calculated, and after 300 cycles, the battery was taken down. $DCR_2$ was tested according to the same solution, $\Delta DCR = (DCR_2-DCR_1)/DCR_1$ was calculated, and $\Delta DCR$ was the growth rate of battery DCR.

3. BET test method of positive electrode active material

A multi-station type full-automatic specific surface area and pore analyzer GeminiVII2390 from U.S. Micromeritics was used, about 7 g of sample was placed into a 9cc long tube with a bulb, degassing was carried out at the temperature of 200°C for 2 h, and then the sample was placed into a main machine to test to obtain BET (specific surface area) data of the positive electrode active material.

4. Test method for water content in electrolyte solution

The electrolyte solution was injected into an electrolytic cell reaching balance, after an indicating electrode detected $H_2O$, electrode oxidation was carried out to oxidize $^-$ into $I_2$, in which, $I_2$ and $H_2O$ were subjected to a quantitative chemical reaction, and then the water content was calculated; and according to 5.9 Determination of moisture in HG/T4067-2015 Hexafluorophosphate Electrolyte Solution, the water content was calculated according to the consumption of iodine, in which, the quantitative reaction formula of $I_2$ and $H_2O$ was: $H_2O+I_2+SO_2+3C_5H_5N=2C_5H_5N \cdot HI+C_5H_5N \cdot SO_3$.

5. Test method for hydrofluoric acid content in electrolyte solution

Hydrofluoric acid analysis by an acid-base titration method (SYA): in a dry environment, free acid in the electrolyte solution was titrated by a standard triethylamine solution, and calculated according to the HF content, HF(ppm)=(V2-V1)/1000*C*20/m*1000000=(V2-V1)*C/m*20,000; in the equation, 0.01 referred to the concentration of the SYA standard solution and is 0.02 mol/L; V0 referred to the volume reading of a burette before titration and has the unit of ml; V referred to the volume reading of the burette after an electrolyte solution sample was added and when titration was performed to an end point and had the unit of ml; 20 referred to the molar weight of HF and had the unit of g/mol; m referred to the volume of weighed electrolyte solution and had the unit of g; and 20000 referred to a coefficient transformed into ug/g.

Table 2

| | Specific surface area of positive electrode active material (m²/g) | Water content in electrolyte solution % | Hydrofluoric acid content in electrolyte solution % | Cycle capacity retention ratio % at 45°C | DCR growth rate % |
|---|---|---|---|---|---|
| Example 1 | 2.3 | 0.0011 | 0.003 | 90.6 | 40.9 |
| Example 2 | 2.4 | 0.0008 | 0.005 | 87.5 | 45.8 |
| Example 3 | 2.4 | 0.0008 | 0.005 | 88.1 | 46.1 |
| Example 4 | 2.2 | 0.0014 | 0.012 | 88.6 | 45.6 |
| Example 5 | 2.8 | 0.0013 | 0.012 | 88.7 | 45.9 |
| Example 6 | 2.8 | 0.0015 | 0.013 | 91.7 | 40.4 |
| Example 7 | 2.9 | 0.0017 | 0.009 | 92.8 | 37.7 |
| Example 8 | 2.6 | 0.0009 | 0.012 | 86.6 | 46.5 |
| Example 9 | 2.7 | 0.0014 | 0.011 | 86.4 | 46.7 |
| Example 10 | 2.7 | 0.0016 | 0.011 | 87 | 46.3 |
| Example 11 | 2.8 | 0.0013 | 0.010 | 87.1 | 38.8 |
| Example 12 | 2.5 | 0.0012 | 0.007 | 92 | 38.5 |
| Example 13 | 2.8 | 0.0009 | 0.008 | 89.5 | 44.1 |
| Example 14 | 2.6 | 0.0015 | 0.011 | 90.1 | 43.3 |
| Example 15 | 2.6 | 0.0018 | 0.013 | 90.1 | 43.9 |
| Example 16 | 2.5 | 0.0006 | 0.009 | 89.8 | 44.1 |
| Example 17 | 2.4 | 0.0014 | 0.008 | 89 | 42.9 |
| Example 18 | 2.5 | 0.0013 | 0.008 | 87 | 44 |
| Example 19 | 2.5 | 0.0013 | 0.008 | 88 | 43.1 |
| Contrast Example 1 | 3.4 | 0.0025 | 0.021 | 76.8 | 105 |
| Contrast Example 2 | 3.6 | 0.0026 | 0.024 | 73.5 | 111 |
| Contrast Example 3 | 3.7 | 0.0028 | 0.023 | 70.7 | 99 |

(continued)

|  | Specific surface area of positive electrode active material (m$^2$/g) | Water content in electrolyte solution % | Hydrofluoric acid content in electrolyte solution % | Cycle capacity retention ratio % at 45°C | DCR growth rate % |
|---|---|---|---|---|---|
| Contrast Example 4 | 3.8 | 0.0025 | 0.027 | 70.1 | 121 |

Conclusion: Table 2 shows that the cycle capacity retention ratio of the corresponding lithium-ion batteries in the Examples 1-19 at 45°C is obviously higher than that in the Contrast Examples 1-4, and the DCR growth rate of the corresponding lithium-ion batteries in the Examples 1-19 is obviously lower than that in the Contrast Examples 1-4, which indicates that the battery provided by the present application has excellent cycle stability under high charge cut-off voltage.

Finally, it is to be noted that the above embodiments are only used for illustrating the technical solutions of the present application, not to limit them, and although the present application is described in detail with reference to the foregoing embodiments, those of ordinary skill in the art should understand that it may still modify the technical solutions described in the foregoing embodiments, or replace some or all of the technical features therein, and these modifications or substitutions do not make the essence of the corresponding technical solutions out of the scope of the technical solutions of the embodiments of the present application, and they should be covered by the scope of the claims and description of the present application. In particular, the technical features mentioned in the various embodiments can be combined in any manner as long as there is no structural conflict. The present application is not limited to the particular embodiments disclosed herein, but rather includes all technical solutions falling within the scope of the claims.

**Claims**

1. A battery, comprising a positive electrode plate and an electrolyte solution, wherein the positive electrode plate comprises $Li_xNi_{(1-y-z)}Co_yM_zO_{2-b}$, and M comprises at least one element from Mn, Al, Fe, Ti, Mg, Cr, Ga, Cu, Zn, Nb and Zr, $0<x\leq1.2$, $0.18\leq y\leq0.25$, $0\leq z\leq0.2$, $1-y-z\geq0.55$, and $0\leq b\leq0.2$; and
the electrolyte solution comprises a nitrile compound, and based on the total mass of the electrolyte solution, the content of cyano groups in the electrolyte solution is w%, $w>0$, and $0.04\leq y/w\leq0.4$.

2. The battery according to claim 1, wherein $0.1\leq y/w\leq0.3$.

3. The battery according to claim 1 or 2, wherein $0.5\leq w\leq5$, preferably, $0.5\leq w\leq2$.

4. The battery according to any one of claims 1 to 3, wherein $0.18\leq y\leq0.2$.

5. The battery according to any one of claims 1 to 4, wherein the nitrile compound comprises a polynitrile compound, and optionally, the length of the carbon chain between two adjacent cyano groups in the polynitrile compound does not exceed 8 carbons.

6. The battery according to claim 5, wherein the polynitrile compound comprises a dinitrile compound.

7. The battery according to any one of claims 1 to 6, wherein the nitrile compound comprises a mononitrile compound, and optionally, the length of the carbon chain in the mononitrile compound does not exceed 4 carbons.

8. The battery according to any one of claims 1 to 7, wherein the electrolyte solution further comprises hexafluorophosphate and ethylene carbonate; and based on the total mass of the electrolyte solution, the content of the hexafluorophosphate is n%, the content of the ethylene carbonate is m%, $n>0$, $m>0$ and $2\leq m/n\leq2.5$.

9. The battery according to claim 8, wherein m and n meet at least one of the following conditions:

    $15\leq m\leq30$, preferably, $20\leq m\leq30$; and
    $8\leq n\leq15$, preferably $10\leq n\leq14$.

10. The battery according to claim 8 or 9, wherein $0.1\leq w/m\leq0.2$.

11. The battery according to any one of claims 1 to 10, wherein the specific surface area of $Li_xNi_{(1-y-z)}Co_yM_zO_{2-b}$ is $\leq 3m^2/g$.

12. The battery according to any one of claims 1 to 11, wherein based on the total mass of the electrolyte solution, the content of water in the electrolyte solution is $\leq 0.002\%$.

13. The battery according to any one of claims 1 to 12, wherein based on the total mass of the electrolyte solution, the content of hydrofluoric acid in the electrolyte solution is $\leq 0.015\%$.

14. An electrical apparatus, comprising the battery according to any one of claims 1 to 13.

1

FIG. 1

2

1 1 1

1

FIG. 2

3

FIG. 3

**FIG. 4**

**FIG. 5**

## INTERNATIONAL SEARCH REPORT

| International application No. |
|---|
| **PCT/CN2023/094855** |

### A. CLASSIFICATION OF SUBJECT MATTER

H01M10/058(2010.01)i; H01M10/0525(2010.01)i; H01M4/525(2010.01)i; H01M10/0567(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 镍, 钴, 溶出, 溶解, 电解液, 电解质溶液, 腈, 含量, 重量, 质量, 六氟磷酸锂, 碳酸乙烯酯, battery, cell, Ni, nickel, Co, cobalt, dissolution, electrolyte, nitrile, content, weight, mass, LiPF6, ethylene, carbonate, EC

### C. DOCUMENTS CONSIDERED TO BE RELEVANT

| Category* | Citation of document, with indication, where appropriate, of the relevant passages | Relevant to claim No. |
|---|---|---|
| X | CN 114373980 A (SHENZHEN CAPCHEM TECHNOLOGY CO., LTD.) 19 April 2022 (2022-04-19)<br>description, paragraphs 0006-0134 | 1-7, 11-14 |
| Y | CN 114373980 A (SHENZHEN CAPCHEM TECHNOLOGY CO., LTD.) 19 April 2022 (2022-04-19)<br>description, paragraphs 0006-0134 | 8-14 |
| X | CN 102394311 A (DONGGUAN AMPEREX TECHNOLOGY LTD. et al.) 28 March 2012 (2012-03-28)<br>description, paragraphs 0006-0093 | 1-7, 11-14 |
| Y | CN 102394311 A (DONGGUAN AMPEREX TECHNOLOGY LTD. et al.) 28 March 2012 (2012-03-28)<br>description, paragraphs 0006-0093 | 8-14 |
| Y | CN 115360412 A (LISHEN (QINGDAO) NEW ENERGY CO., LTD.) 18 November 2022 (2022-11-18)<br>description, paragraphs 0007-0064 | 8-14 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 December 2023** | **25 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/094855**

### C.    DOCUMENTS CONSIDERED TO BE RELEVANT

| Category* | Citation of document, with indication, where appropriate, of the relevant passages | Relevant to claim No. |
|---|---|---|
| Y | CN 102496738 A (TIANJIN LISHEN BATTERY JOINT-STOCK CO., LTD.) 13 June 2012 (2012-06-13)<br>description, paragraphs 0005-0028 | 8-14 |
| A | CN 113299972 A (ZHUHAI COSMX BATTERY CO., LTD.) 24 August 2021 (2021-08-24)<br>entire document | 1-14 |
| A | CN 114068910 A (NINGDE AMPEREX TECHNOLOGY LTD.) 18 February 2022 (2022-02-18)<br>entire document | 1-14 |

Form PCT/ISA/210 (second sheet) (July 2022)

### INTERNATIONAL SEARCH REPORT
Information on patent family members

International application No.

**PCT/CN2023/094855**

| Patent document cited in search report | | | Publication date (day/month/year) | Patent family member(s) | | | Publication date (day/month/year) |
|---|---|---|---|---|---|---|---|
| CN | 114373980 | A | 19 April 2022 | WO | 2023104038 | A1 | 15 June 2023 |
| CN | 102394311 | A | 28 March 2012 | None | | | |
| CN | 115360412 | A | 18 November 2022 | None | | | |
| CN | 102496738 | A | 13 June 2012 | None | | | |
| CN | 113299972 | A | 24 August 2021 | None | | | |
| CN | 114068910 | A | 18 February 2022 | KR | 20230035681 | A | 14 March 2023 |
| | | | | WO | 2023087937 | A1 | 25 May 2023 |

Form PCT/ISA/210 (patent family annex) (July 2022)

**EP 4 664 596 A1**

## REFERENCES CITED IN THE DESCRIPTION

**Patent documents cited in the description**

- GB 97222006 T